(19) Europäisches Patentamt
European Patent Office
Office européen des brevets

(11) **EP 3 930 227 B1**

(12) **FASCICULE DE BREVET EUROPEEN**

(45) Date de publication et mention
de la délivrance du brevet:
**03.04.2024 Bulletin 2024/14**

(21) Numéro de dépôt: **21181246.6**

(22) Date de dépôt: **23.06.2021**

(51) Classification Internationale des Brevets (IPC):
*H04B 17/345* (2015.01)    *H04B 17/26* (2015.01)
*H04B 1/10* (2006.01)    *H04L 1/20* (2006.01)
*H04B 17/318* (2015.01)

(52) Classification Coopérative des Brevets (CPC):
**H04B 17/345; H04B 1/1027; H04B 17/26;
H04B 17/318; H04L 1/20**

(54) **PROCÉDÉ ET DISPOSITIF DE DÉTERMINATION DU BRUIT DANS UN SIGNAL**

VERFAHREN UND VORRICHTUNG ZUR BESTIMMUNG DES RAUSCHENS IN EINEM SIGNAL

METHOD AND APPARATUS FOR THE DETERMINATION OF THE NOISE IN A SIGNAL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.06.2020 FR 2006752**

(43) Date de publication de la demande:
**29.12.2021 Bulletin 2021/52**

(73) Titulaire: **Orange
92130 Issy-les-Moulineaux (FR)**

(72) Inventeurs:
• **SELVA, Esteban
92326 CHATILLON CEDEX (FR)**
• **KOUNTOURIS, Apostolos
92326 CHÂTILLON CEDEX (FR)**

(74) Mandataire: **Plasseraud IP
66, rue de la Chaussée d'Antin
75440 Paris Cedex 09 (FR)**

(56) Documents cités:
**US-A1- 2013 322 425    US-A1- 2017 205 510**

EP 3 930 227 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**Domaine technique**

La présente divulgation relève du domaine de traitement du signal, en particulier du domaine de la détermination du bruit dans un signal, par exemple un signal parcimonieux dans le domaine fréquentiel.

**Technique antérieure**

Il est connu dans le domaine des procédés et des dispositifs de traitement du signal de déterminer le bruit d'un signal à partir de l'estimation de la variance du bruit.

On connait un procédé, présenté par exemple dans le document de M. Hamid, N. Björsell and S. Ben Slimane, "Sample covariance matrix eigen values based blind SNR estimation" 2014 IEEE International Instrumentation and Measurement Technology Conférence (I2MTC) Proceedings, Montevideo, 2014, pp. 718-722, pour déterminer la variance du bruit, comprenant le calcul de valeurs propres de la matrice de covariance d'échantillons du signal, et l'utilisation d'un critère de Longueur de Description Minimale pour séparer les valeurs propres relatives au bruit uniquement de celles relatives au mélange du signal utile et du bruit. Pour déterminer la variance du bruit, des densités de Marchenko-Pastur sont calculées à partir de paramètres liés aux valeurs propres relatives au bruit, et une qualité de l'ajustement sur des paramètres liés à ces densités permet d'aboutir à l'estimation de la variance du bruit.

Cependant, le calcul de la matrice de covariance et sa décomposition en valeurs et vecteurs propres sont coûteux en termes de calcul, et atteint une complexité polynomiale cubique de $O(n^3)$, c'est-à-dire que pour un nombre de n données utilisées dans le procédé, il est nécessaire d'effectuer un nombre de $n^3$ opérations. En outre, la reproductibilité de l'estimation de la variance du bruit n'est pas assurée. Ce procédé nécessite de nombreuses étapes de calcul ce qui augmente la possibilité d'instabilités numériques et de leur propagation à chaque étape du procédé. De plus, le nombre d'échantillons de signal nécessaires est relativement conséquent, ce qui augmente les ressources nécessaires.

On connait aussi un procédé, présenté notamment dans le document de D. Makovoz, "Noise Variance Estimation In Signal Processing" 2006 IEEE International Symposium on Signal Processing and Information Technology, Vancouver, BC, 2006, pp. 364-369, pour déterminer la variance du bruit dans un signal parcimonieux comprenant la détermination d'un sous-ensemble d'échantillons du signal contenant exclusivement des valeurs aberrantes correspondant à du signal utile, et le tri de ces valeurs aberrantes de manière ascendante. Le procédé comprenant aussi la détermination d'une portion de la fonction de répartition d'une loi normale centrée dont la variance correspond à la variance du bruit.

Un tel procédé permet de déterminer la variance du bruit de façon précise mais manque de répétabilité.

Un autre exemple de détermination de la variance du bruit est fourni dans le document US2013/0322425.

Le présent exposé vise à remédier aux inconvénients précités.

**Résumé**

Pour cela, il est proposé selon un premier aspect, un procédé de détermination d'un bruit associé à un signal reçu, par exemple par un équipement connecté à un réseau de télécommunications, ledit signal reçu étant préalablement échantillonné sous forme d'une succession de données, le procédé comportant :

- sélectionner une partie des données du signal reçu et déterminer un nombre déterminé de partitions possibles de la partie sélectionnée des données du signal reçu, le nombre de partitions étant supérieur ou égal à deux,
- partitionner toutes les données du signal reçu selon ledit nombre de partitions,
- estimer des moyennes d'énergie du signal dans chacune des partitions et identifier une partition parmi lesdites partitions présentant une moyenne minimale, la partition identifiée étant une partition de bruit, et
- estimer une variance de la partition du bruit, le bruit associé au signal reçu étant fonction de ladite variance de la partition du bruit.

Le nombre de partitions possibles étant déterminé à partir d'une partie des données du signal, il est possible de réduire les ressources de calcul nécessaires. De plus, le procédé est plus robuste et moins complexe car il ne nécessite pas la résolution d'équations numériques.

Les caractéristiques exposées dans les paragraphes suivants peuvent, optionnellement, être mises en oeuvre. Elles peuvent être mises en oeuvre indépendamment les unes des autres ou en combinaison les unes avec les autres.

Le signal reçu peut être tout type de signal, dans le domaine temporel ou fréquentiel. En particulier, le signal reçu peut être un signal parcimonieux dans le domaine fréquentiel. Le procédé peut être utilisé pour estimer la variance de tout type de bruit, en particulier un bruit blanc gaussien additif. Le signal reçu peut être reçu par un équipement du réseau de télécommunications.

Par exemple, la sélection de parties de données de signal reçu peut être aléatoire. Cette sélection peut être réalisée par un tirage aléatoire d'un nombre prédéterminé de données du signal reçu. Alternativement, la sélection de parties de données du signal reçu peut être réalisée par une sélection ciblée ou aléatoire dans chaque sous-bande de fréquence du signal reçu.

La variance de la partition du bruit peut être la moyenne d'énergie de la partition de bruit.

Le procédé peut comprendre en outre :

- affiner l'estimation de la variance en déterminant des données aberrantes parmi les données du signal reçu dans la partition de bruit et pondérer lesdites données aberrantes de la partition de bruit.

Cette étape permet d'obtenir une partition de bruit plus cohérente et le procédé est ainsi plus robuste.

Par exemple, les données présentant une énergie dépassant un seuil déterminé peuvent être considérées comme des données aberrantes dans la partition de bruit et peuvent être retirées de la partition de bruit ou pondérées par un coefficient prédéterminé. Ce seuil peut être déterminé par la méthode des « trois écart-types » ou tout autre méthode statistique.

Selon un mode de réalisation, la détermination du nombre de partitions peut comporter :

- faire varier le nombre de partitions entre des valeurs déterminées, et pour chaque valeur du nombre de partitions:

    - partitionner la partie des données du signal reçu selon la valeur du nombre de partitions,

    - calculer un coefficient de qualité mesurant la qualité du partitionnement de la partie des données du signal reçu, et

    - associer la valeur du nombre de partitions au coefficient de qualité

Le procédé peut comprendre en outre la sélection de la valeur d'un nombre optimal de partitions correspondant à la valeur du nombre de partition associée au coefficient de qualité le plus élevé.

Le partitionnement de la partie des données du signal reçu peut être réalisé par toute méthode de partitionnement telle que la méthode des k-moyennes, les méthodes de filtrage par motif (en anglais « pattern matching »), ou les méthodes de regroupement hiérarchique.

Par exemple, le nombre optimal peut varier entre 2 et 7.

Selon un mode de réalisation, le partitionnement des données du signal reçu peut être réalisé par une méthode de k-moyennes comprenant au préalable la génération d'un centre de gravité pour chaque partition et les étapes itératives consistant à :

- pour chaque centre de gravité, assigner les données du signal reçu les plus proches du centre de gravité dans la partition correspondant au centre de gravité, et

- pour chaque partition, mettre à jour le centre de gravité de la partition en fonction de la moyenne d'énergie du signal dans la partition.

La méthode des k-moyennes permet de réduire la complexité du procédé et d'obtenir un partitionnement homogène des données du signal reçu.

Selon ce mode de réalisation, le coefficient de qualité peut être un coefficient de silhouette. Le coefficient de silhouette est un coefficient compris entre -1 et 1 et mesure la qualité du partitionnement d'un jeu de données en différentes partitions. Plus le coefficient de silhouette est élevé, plus le partitionnement est pertinent. Ainsi, le nombre optimal de partitions correspond au coefficient de silhouette le plus élevé.

Le partitionnement des données du signal reçu peut être terminé lorsqu'un nombre d'itérations des étapes itératives est atteint ou lorsque les centres de gravité des partitions sont inchangés d'une itération à une autre. Ainsi, le procédé est robuste quelles que soient les données du signal reçu et sa terminaison est toujours garantie.

Selon un mode de réalisation, le procédé peut comporter préalablement un prétraitement du signal reçu comportant :

- estimer des énergies du signal reçu pour une pluralité de sous-bandes,

- fenêtrer lesdites énergies du signal reçu en fonction d'une fenêtre de longueur déterminée, et

- générer les données du signal reçu par somme et pondération des énergies du signal reçu fenêtrées.

Ces étapes de prétraitement permettent de consolider les données du signal reçu. En particulier, les énergies peuvent être fenêtrées selon une fenêtre rectangle d'une longueur prédéterminée. Cette longueur peut être choisie pour optimiser le partitionnement. Les sous-bandes peuvent être des sous-bandes de fréquence du signal reçu ayant une même largeur ou des largeurs variables.

Par exemple, les étapes du procédé peuvent être appliquées aux données du signal reçu après le prétraitement ou sans le prétraitement.

Selon un autre aspect, il est proposé un procédé d'estimation d'un rapport signal à bruit d'un signal reçu comprenant :

- déterminer une variance d'un bruit associé au signal reçu par un procédé d'estimation de la variance du bruit tel que défini précédemment ;

- estimer le bruit en fonction de la variance déterminée, et

- estimer le rapport signal à bruit en fonction du bruit et du signal reçu.

Selon un autre aspect, il est proposé un procédé de détection de la présence d'un signal dans un système de télécommunication comprenant :

- déterminer une variance d'un bruit associé à un signal à partir d'échantillons déterminés selon un procédé d'estimation de la variance du bruit, tel que défini précédemment,

- estimer un seuil de détection en fonction de la variance déterminée,

- recevoir une énergie pendant une durée d'acquisition déterminée, et

- déterminer la présence d'un signal lorsque l'énergie reçue est supérieure au seuil de détection estimé.

Selon un autre aspect, il est proposé un procédé d'estimation d'un niveau d'occupation spectrale d'un signal reçu préalablement échantillonné comprenant :

- pour chaque sous-bande de fréquence d'une pluralité de sous-bandes du signal reçu, déterminer un support du signal par la détection de la présence d'un signal dans ladite sous-bande de fréquence selon le procédé de détection de la présence d'un signal tel que défini précédemment, et

- estimer le niveau d'occupation spectrale en fonction de ou des supports du signal déterminés.

Selon un autre aspect, il est proposé un dispositif de détermination d'un bruit associé à un signal reçu par ledit dispositif, comportant un circuit de traitement pour la mise en oeuvre du procédé d'estimation de la variance du bruit tel que défini précédemment. Typiquement, ce dispositif peut être l'équipement précité, connecté au réseau de télécommunications, ou encore une sous-partie de cet équipement (un module par exemple d'estimation de bruit).

Selon un autre aspect, il est proposé un programme informatique comportant des instructions pour la mise en oeuvre de tout ou partie d'un procédé tel que défini précédemment lorsque ce programme est exécuté par un processeur. Selon un autre aspect, il est proposé un support d'enregistrement non transitoire, lisible par un ordinateur, sur lequel est enregistré un tel programme.

**Brève description des dessins**

D'autres caractéristiques, détails et avantages apparaîtront à la lecture de la description détaillée ci-après, et à l'analyse des dessins annexés, sur lesquels :

Fig. 1

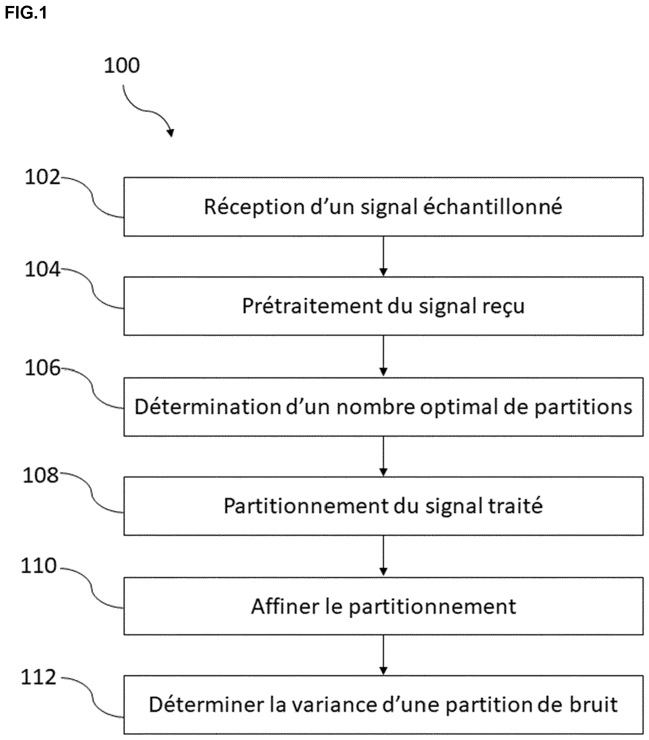

[Fig. 1] montre, sous forme d'organigramme, un exemple d'étapes d'un procédé de détermination de la variance du bruit dans un signal, selon un mode de réalisation.

Fig. 2

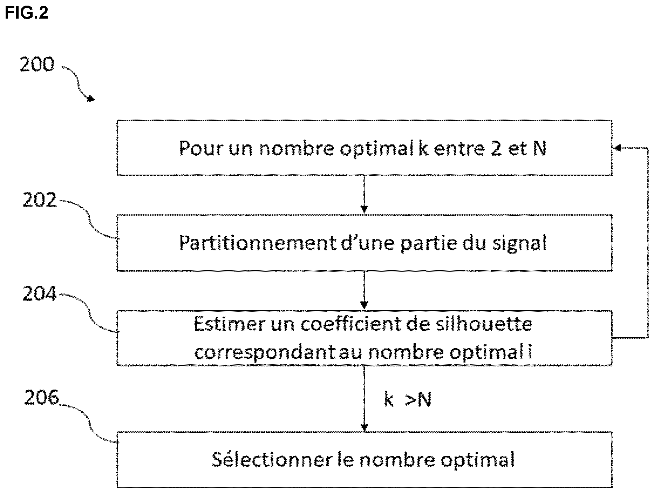

[Fig. 2] montre, sous forme d'organigramme, un exemple d'étapes de détermination du nombre optimal de partitions selon un mode de réalisation.

Fig. 3

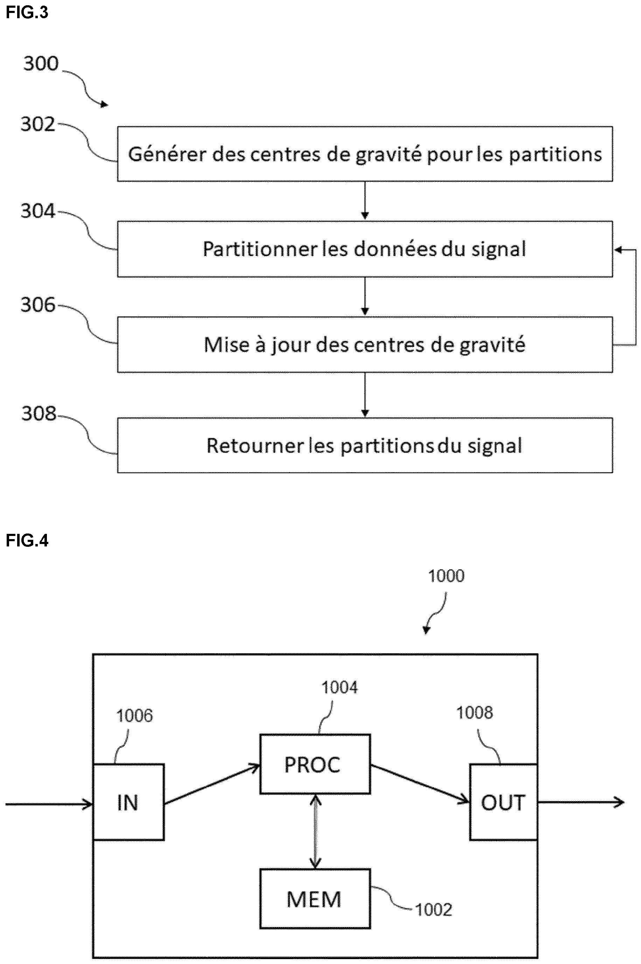

[Fig. 3] montre, sous forme d'organigramme, un exemple d'étapes de partitionnement des données d'un signal reçu selon un mode de réalisation.

Fig. 4

[Fig. 4] montre un bloc-diagramme schématique d'un circuit de traitement pour la mise en oeuvre, selon un mode de réalisation, d'un procédé selon l'invention.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits, par souci de simplicité.

## Description des modes de réalisation

Il est maintenant fait référence à la **figure 1.** Le procédé 100 comprend une première étape 102 de réception d'un signal préalablement échantillonné. Le signal reçu comprend un signal utile et du bruit. Le procédé de la figure 1 vise à déterminer la variance de ce bruit. Le signal reçu peut être tout type de signal, en particulier un signal parcimonieux dans le domaine fréquentiel ou temporel. Le signal reçu peut être un signal radio.

Par exemple, le signal reçu est parcimonieux dans le spectre fréquentiel, et présente une occupation spectrale du signal utile dans la bande d'écoute inférieure à 25 %. Le signal utile peut être composé de plusieurs sous-bandes non consécutives, le signal étant alors appelé signal multi-bandes, chaque sous-bande pouvant contenir en moyenne au moins une trentaine d'échantillons ce qui correspond à moins de 0,5 % d'occupation spectrale pour une sous-bande, en considérant un signal utile avec 6000 échantillons.

Dans la suite, le signal reçu est représenté dans le domaine fréquentiel par un vecteur XF d'une longueur L. Bien entendu, le procédé n'est pas limité à un signal échantillonné dans le domaine fréquentiel et peut s'appliquer à un signal échantillonné dans le domaine temporel.

Dans une étape de prétraitement 104, le signal reçu XF subit le traitement consistant à :

- calculer l'énergie du signal reçu XF pour chaque sous-bande du signal reçu, qui vaut le carré du module du signal reçu XF sur une sous-bande donnée,

- fenêtrer les énergies calculées selon une fenêtre rectangulaire de longueur prédéterminée T, et

- sommer et pondérer les valeurs fenêtrées pour aboutir à un vecteur de signal traité PS de taille L-T.

Chaque sous-bande du signal est aussi appelée bin. Les étapes ci-dessous consistent à appliquer la formule suivante au signal reçu XF :

[math 1]

$$\forall i \in \left[\left[0, L-T\right]\right], PS[i] = \frac{1}{LT} \sum_{k=i}^{i+T} |XF[k]|^2$$

La longueur prédéterminée T de la fenêtre rectangulaire peut être égale à 30. Cette longueur est choisie pour optimiser le procédé 100.

Le procédé 100 peut comprendre la réception d'un signal traité PS directement. Dans ce cas, l'étape de prétraitement 102 n'est pas nécessaire.

Le procédé 100 comprend ensuite une étape 106 de détermination d'un nombre optimal de partitions du signal reçu. En effet, le nombre optimal de partitions est à priori inconnu. Cette étape est réalisée sur une partie présélectionnée du signal traité PS. La partie présélectionnée peut être choisie aléatoire à partir du signal traité PS ou à partir de chaque sous-bande du signal traité PS.

Lorsque le nombre optimal de partitions est déterminé, le procédé 100 comprend le partitionnement, 108, du signal traité PS selon le nombre optimal de partitions déterminé à l'étape 106. Le partitionnement (étape 108) est réalisé sur l'ensemble du signal traité PS. À l'issue de cette étape, on obtient au moins deux partitions du signal traité PS, en particulier un nombre optimal de partitions du signal traité PS sont obtenues. Une partition, dite partition de bruit, parmi ces partitions comprend des valeurs du vecteur PS contenant uniquement du bruit. Cette partition de bruit est celle présentant une moyenne d'énergie des valeurs du signal traité PS, la plus faible en comparaison avec la moyenne d'énergie des valeurs du signal traité PS dans les autres partitions. La partition de bruit peut présenter une distribution des valeurs du signal traité PS qui converge vers une loi normale G de moyenne $N_0$ et d'écart-type $\sigma$.

Le partitionnement 108 du signal traité PS peut être réalisé selon différentes méthodes, par exemple par la méthode des k-moyennes, par des méthodes de filtrage par motif (en anglais « pattern matching »), par des méthodes de regroupement hiérarchique, etc.

Pour assurer un partitionnement efficace du signal reçu XF, la longueur T de la fenêtre rectangle lors du prétraitement 104 du signal reçu XF est optimisée. En effet, une valeur trop faible de la longueur T risque de favoriser la dispersion des valeurs d'énergie du signal traité PS, ce qui rend le partitionnement plus difficile et donc moins efficace. À l'inverse, une valeur trop grande de la longueur T augmente le nombre de valeurs, dites frontières du signal traité PS, qui correspondent en partie à des valeurs de bruit uniquement, et en partie à un mélange de signal utile et de bruit, ce qui est également préjudiciable au partitionnement.

La variance du bruit est déterminée par estimation de la variance de la partition de bruit, à l'étape 112. Cette variance peut correspondre à la moyenne $N_0$ de la partition de bruit.

Selon un mode de réalisation, le procédé 100 comprend une étape 110 au cours de laquelle le partitionnement du signal traité PS, réalisé à l'étape 108, est affiné. L'étape 110 vise à retirer des valeurs du signal traité PS de la partition du bruit, correspondant potentiellement à des valeurs de signal utile de faible énergie qui peuvent être confondues avec du bruit. Par exemple, pour la partition de bruit présentant une répartition gaussienne G, de telles valeurs correspondent à des valeurs aberrantes. En effet, les valeurs de la partition de bruit contenant un mélange de signal utile et de bruit sont généralement beaucoup plus hautes que celles contenant uniquement du bruit, et sont peu nombreuses, donc plus simples à isoler.

Pour retirer ces valeurs aberrantes, on peut fixer un seuil par exemple à « trois écart-types » au-delà duquel ces valeurs sont exclues. La moyenne $N_0$ et l'écart-type $\sigma$ des valeurs contenues dans la partition de bruit sont calculés et les valeurs aberrantes considérées comme celles étant supérieures à $(N_0 + 3\,\sigma)$ sont retirées. Ces étapes sont répétées jusqu'à ce que plus aucune valeur aberrante ne soit détectée. La partition de bruit est ainsi plus cohérente. La convergence des itérations de ces étapes peut être généralement atteinte en 1 à 10 itérations. Cependant, on limitera le nombre d'itérations à une valeur de seuil prédéterminée, par exemple égale à 20. L'étape 110 est terminée lorsque le nombre d'itérations dépasse la valeur de seuil précitée pour parer aux situations les moins favorables dans lesquelles le procédé ne converge pas vers une solution satisfaisante, permettant de garantir la terminaison du procédé 100.

Les étapes 106 à 112 décrites ci-dessus sont appliquées au signal traité PS mais peuvent être directement appliquées au signal reçu XF.

Le procédé 100 est avantageux en ce qu'un nombre optimal de partitions est déterminé sur une partie du signal traité XF, ce qui réduit considérablement les ressources de calcul nécessaires. De plus, le procédé 100 permet d'obtenir une estimation plus précise et fiable de la variance du bruit. En effet, les inventeurs ont constaté une détermination de la variance avec écart sur l'estimation de la variance du bruit de l'ordre de 1 à 3% en moyenne et un écart-type d'environ 2%. Le procédé 100 présente un nombre limité d'étapes et ne repose pas sur une résolution numérique d'équations, ce qui a pour effet de limiter la propagation d'instabilités numériques. Le procédé 100 présente ainsi une complexité linéaire par rapport à un nombre n d'échantillons, autrement dit la complexité est du type O(n). En outre, le procédé 100 permet de déterminer la variance du bruit à partir d'un nombre réduit d'échantillons. Les inventeurs ont constaté qu'un nombre d'échantillons nécessaire pour obtenir de bonnes performances devait être compris entre 1000 et 8000, et au maximum égal à 16000, selon le degré d'occupation temporelle/fréquentielle du signal reçu. Cela permet de réaliser l'estimation de la variance du bruit plus fréquemment, ce qui peut servir à des fins de reconfiguration d'un système de télécommunication.

Le procédé 100 peut être utilisé pour déterminer la variance de tout type de bruit en particulier un bruit blanc gaussien additif.

La variance déterminée par le procédé 100 peut être utilisée dans un système de télécommunication pour estimer la qualité de transmission d'un signal S par exemple par estimation du rapport signal sur bruit (RSB). Selon ce mode de réalisation, le bruit B du signal S est estimé à partir de la variance obtenue à l'étape 112 comme suit :

[math 2]

$$B = M * N_0$$

Avec M le nombre d'échantillons compris dans le signal S.

Le rapport signal sur bruit RSB pet être calculé par la formule suivante :

[math 3]

$$RSB = \frac{S+B}{B} - 1$$

Selon un autre mode de réalisation, la variance déterminée à l'étape 112 peut être exploitée pour détecter la présence d'un signal dans un système de télécommunication. Pour cela, un seuil d'énergie est déterminé en fonction de la variance. Un tel procédé de détection permet de détecter la présence d'un signal lorsque l'énergie reçue est supérieure au seuil d'énergie.

Selon un autre mode de réalisation, la variance déterminée à l'étape 112 peut être utilisée pour déterminer le niveau de parcimonie du signal, c'est-à-dire le niveau d'occupation spectrale du signal. Pour cela, un support du signal est déterminé pour chaque sous-bande de fréquence du signal. Un support du signal est déterminé si un signal est détecté dans cette sous-bande, par exemple par détection d'une énergie supérieure au seuil d'énergie précédemment décrit. Les supports du signal ainsi déterminés permettent d'estimer la répartition du signal dans le domaine fréquentiel.

La **figure 2** représente un exemple de procédé (200) de détermination du nombre optimal qui peut être mis en oeuvre lors de l'étape 106 du procédé 100. Dans le procédé 200, le nombre optimal est déterminé pour un partitionnement par la méthode des k-moyennes.

Le procédé 200 est appliqué à un sous-ensemble de longueur réduite extrait du signal traité PS. Ce sous-ensemble peut être sélectionné par un tirage aléatoire, sans remise, de 100 valeurs dans le signal traité PS. Ce sous-ensemble permet de réduire grandement la complexité du procédé 200 sans impact négatif significatif sur le choix du nombre optimal de partitions.

Le procédé 200 comprend un nombre k d'itérations d'étapes 202 et 204, le nombre k étant entier et variant entre 2 et un nombre prédéterminé N, par exemple égal à 7. L'étape 202 comprend un partitionnement du sous-ensemble du signal traité PS selon le nombre k de partitions. Pour un nombre k de partitions du sous-ensemble du signal traité PS, un coefficient de silhouette est calculé à l'étape 204.

Pour connaître le nombre optimal de clusters, le coefficient de silhouette est utilisé. Le coefficient de silhouette est compris entre -1 et 1 et mesure la qualité du partitionnement d'un jeu de données en différentes partitions. Plus le coefficient de silhouette est élevé, plus le partitionnement est pertinent.

À la fin des itérations des étapes 202 et 204, le nombre optimal de partitions du signal traité PS est déterminé en fonction des coefficients de silhouette calculés à l'étape 204. Le nombre de partitions k correspondant au coefficient de silhouette le plus élevé est retenu comme le nombre optimal, noté K, de partitions.

Le procédé 200 peut comprendre une étape supplémentaire pour déterminer si le signal reçu peut être partitionné. Par exemple, lorsque tous les coefficients de silhouette, déterminés à l'étape 204, sont inférieurs à 0.7, le signal reçu est considéré comme inadapté au partitionnement et le procédé 200 est terminé. En effet, lorsque les coefficients de silhouette sont tous inférieurs à 0.7, ceci correspond à un signal reçu comprenant uniquement du signal utile ou à un signal reçu réparti sur de trop nombreuses fréquences, ce qui risque de limiter les performances du procédé 200.

La **figure 3** représente un exemple de procédé (300) de partitionnement d'un signal reçu qui peut être mis en oeuvre lors de l'étape 108 du procédé 100. Le procédé 300 implémente la méthode de partitionnement par la méthode des k-moyennes. Le procédé 300 est appliqué pour l'ensemble des données du signal traité PS.

Le procédé 300 comprend une étape 302 d'initialisation comprenant la génération d'un centre de gravité pour chaque partition du signal traité XF. Le nombre de centres de gravité correspond au nombre optimal de partitions, par exemple le nombre optimal K déterminé selon le procédé 200 de la figure 2. Les centre de gravité peuvent être générés par la méthode de « k-moyennes++ ».

Le procédé 300 comprend ensuite une étape 304 de partitionnement de l'ensemble des données du signal traité PS en fonction des centres de gravité. Pour cela, chaque donnée du signal traité PS est assignée au centre de gravité le plus proche. Ainsi, l'ensemble des données du signal traité PS assigné à un centre de gravité forme une partition.

Le procédé 300 comprend ensuite une étape 306 de mise à jour des centres de gravité. Chaque centre de gravité est actualisé par la moyenne d'énergie de sa partition.

Les étapes 304 et 306 sont réitérées jusqu'à ce que les valeurs des centres de gravité convergent, c'est-à-dire qu'elles ne sont plus modifiées lors de l'étape 306 de mise à jour. Lorsque les étapes 304 et 306 sont réitérées un nombre limité d'itérations préalablement déterminé, le procédé 300 est terminé.

À la fin des itérations des étapes 304 et 306, le signal traité PS est partitionné selon le nombre optimal de partition.

La **figure 4,** illustre, selon un mode particulier de réalisation de l'invention, un dispositif 1000 pour mettre en oeuvre le procédé de détermination de la variance du bruit décrit plus haut en relation avec la figure 1.

Le dispositif 1000, qui est de préférence un circuit intégré, est compris dans un système de télécommunication, par exemple une antenne radio, un terminal de communication, etc.

Le dispositif 1000 comprend un espace 1002 de stockage, par exemple une mémoire MEM, et une unité 1004 de traitement équipée par exemple d'un processeur PROC. L'espace 1002 de stockage est par exemple une mémoire non volatile (ROM ou Flash, par exemple), et peut constituer un support d'enregistrement, ce support d'enregistrement pouvant en outre comprendre un programme d'ordinateur.

Le dispositif 1000 comprend en outre un module de communication permettant au dispositif de se connecter à un réseau de télécommunications, et d'échanger des données avec d'autres dispositifs par l'intermédiaire du réseau de télécommunications. Par exemple, le module de communication peut être une interface réseau Wifi ou Ethernet, ou encore un module de communication Bluetooth.

Le module de communication du dispositif 1000 comprend un module 1006 de réception de données, par exemple un récepteur IN, et un module 1008 d'émission de données, par exemple un émetteur OUT.

Le module 1006 est configuré pour recevoir un signal comprenant du bruit. Le module 1008 est configuré pour retourner une variance déterminée et/ou un bruit estimé à partir de ladite variance.

L'espace 1002 de stockage, qui peut être sécurisé, est configuré pour enregistrer et stocker toute donnée lue par le module 1006, traitée par l'unité 1004 et/ou envoyée par le module 1008.

L'unité 1004 de traitement, qui peut être pilotée par un programme, est configurée pour mettre en oeuvre le procédé de détermination de la variance du bruit tel que décrit en relation avec la figure 1.

À l'initialisation, les instructions d'un programme pilotant l'unité 1004 de traitement, sont par exemple chargées dans une mémoire vive (RAM, par exemple) non représentée comprise dans le dispositif 1000, avant d'être exécutées par le processeur de l'unité 1004 de traitement.

## Revendications

1.  Procédé (100) de détermination d'un bruit associé à un signal reçu par un équipement connecté à un réseau de télécommunications, ledit signal reçu étant préalablement échantillonné sous forme d'une succession de données, le procédé comportant :

    - sélectionner une partie des données du signal reçu et déterminer (106,200) un nombre de partitions possibles de la partie sélectionnée des données du signal reçu, le nombre de partitions étant supérieur ou égal à deux,
    - partitionner (108,300) toutes les données du signal reçu selon ledit nombre de partitions,
    - estimer des moyennes d'énergie du signal dans chacune des partitions et identifier une partition parmi lesdites partitions présentant une moyenne minimale, la partition identifiée étant une partition de bruit, et
    - estimer (112) une variance de la partition du bruit, le bruit associé au signal reçu étant fonction de ladite variance de la partition du bruit.

2.  Procédé (100) selon la revendication 1, comportant :

    - affiner (110) l'estimation de la variance en déterminant des données aberrantes parmi les données du signal reçu dans la partition de bruit et pondérer lesdites données aberrantes de la partition de bruit.

3.  Procédé (100) selon la revendication 1 ou 2, dans lequel la détermination (106,200) du nombre de partitions comporte :

    - faire varier le nombre de partitions entre des valeurs déterminées, et pour chaque valeur du nombre de partitions :

        - partitionner (202) la partie des données du signal reçu selon la valeur du nombre de partitions,
        - calculer (204) un coefficient de qualité mesurant la qualité du partitionnement de la partie des données du signal reçu,
        - associer la valeur du nombre de partitions au coefficient de qualité ; et

    ledit procédé comprenant en outre sélectionner (206) la valeur d'un nombre optimal de partitions correspondant au nombre de partitions associée au coefficient de qualité le plus élevé.

4.  Procédé (100) selon l'une des revendications 1 à 3, dans lequel le partitionnement (108,300) des données du signal reçu est réalisé par une méthode de k-moyennes comprenant au préalable la génération (302) d'un centre de gravité pour chaque partition et les étapes itératives consistant à :

- pour chaque centre de gravité, assigner (304) les données du signal reçu les plus proches dudit centre de gravité dans la partition correspondant audit centre de gravité, et
- pour chaque partition, mettre à jour (306) le centre de gravité de ladite partition en fonction de la moyenne d'énergie du signal dans ladite partition.

**5.** Procédé (100) selon la revendication 4, prise en combinaison avec la revendication 3, dans lequel le coefficient de qualité est un coefficient de silhouette.

**6.** Procédé (100) selon la revendication 4 ou 5, dans lequel le partitionnement (108,300) des données du signal reçu est terminé lorsqu'un nombre d'itérations des étapes itératives est atteint ou lorsque les centres de gravité des partitions sont inchangés d'une itération à une autre.

**7.** Procédé (100) selon l'une des revendications 1 à 6, comportant préalablement un prétraitement (104) du signal reçu comportant :

- estimer des énergies du signal reçu pour une pluralité de sous-bandes,
- fenêtrer lesdites énergies du signal reçu en fonction d'une fenêtre de longueur déterminée, et
- générer les données du signal reçu par somme et pondération des énergies du signal reçu fenêtrées.

**8.** Procédé (100) selon l'une des revendications 1 à 7, dans lequel la sélection de partie de données de signal reçu est aléatoire.

**9.** Procédé (100) selon l'une des revendications 1 à 8, dans lequel la variance de la partition du bruit est la moyenne d'énergie de la partition de bruit.

**10.** Procédé d'estimation d'un rapport signal à bruit d'un signal reçu comprenant :

- déterminer une variance d'un bruit associé au signal reçu par un procédé (100) selon l'une quelconque des revendications 1 à 9 ;
- estimer le bruit en fonction de la variance déterminée, et
- estimer le rapport signal à bruit en fonction du bruit et du signal reçu.

**11.** Procédé de détection de la présence d'un signal dans un système de télécommunication comprenant :

- déterminer une variance d'un bruit associé à un signal à partir d'échantillons déterminés selon un procédé (100) selon l'une quelconque des revendications 1 à 9,
- estimer un seuil de détection en fonction de la variance déterminée,
- recevoir une énergie pendant une durée d'acquisition déterminée, et
- déterminer la présence d'un signal lorsque l'énergie reçue est supérieure au seuil de détection estimé.

**12.** Procédé d'estimation d'un niveau d'occupation spectrale d'un signal reçu préalablement échantillonné comprenant :

- pour chaque sous-bande de fréquence d'une pluralité de sous-bandes du signal reçu, déterminer un support du signal par la détection de la présence d'un signal dans ladite sous-bande de fréquence selon le procédé de la revendication 11, et
- estimer le niveau d'occupation spectrale en fonction de ou des supports du signal déterminés.

**13.** Dispositif (1000) de détermination d'un bruit associé à un signal reçu par ledit dispositif, comportant un circuit de traitement pour la mise en oeuvre du procédé (100) selon l'une des revendications 1 à 9.

**14.** Programme informatique comportant des instructions pour la mise en oeuvre du procédé (100) selon l'une des revendications 1 à 9, lorsque lesdites instructions sont exécutées par un processeur d'un circuit de traitement.

**Patentansprüche**

1. Verfahren (100) zur Bestimmung eines Rauschens, das mit einem Signal assoziiert ist, das durch eine mit einem Telekommunikationsnetz verbundene Ausrüstung empfangen wird, wobei das empfangene Signal zuvor in Form einer Folge von Daten abgetastet wird, wobei das Verfahren Folgendes umfasst:

   - Auswählen eines Teils der Daten des empfangenen Signals und Bestimmen (106, 200) einer Anzahl von möglichen Partitionen des ausgewählten Teils der Daten des empfangenen Signals, wobei die Anzahl von Partitionen größer als oder gleich zwei ist,
   - Partitionieren (108, 300) aller Daten des empfangenen Signals gemäß der Anzahl von Partitionen,
   - Ermitteln von Leistungsmittelwerten des Signals in jeder der Partitionen und Identifizieren einer Partition unter den Partitionen, die einen kleinsten Mittelwert aufweist, wobei die identifizierte Partition eine Rauschpartition ist, und
   - Ermitteln (112) einer Varianz der Partition des Rauschens, wobei das mit dem empfangenen Signal assoziierte Rauschen von der Varianz der Partition des Rauschens abhängt.

2. Verfahren (100) nach Anspruch 1, umfassend:

   - Verfeinern (110) der Ermittlung der Varianz durch das Bestimmen von Ausreißerdaten unter den Daten des empfangenen Signals in der Rauschpartition und Gewichten der Ausreißerdaten der Rauschpartition.

3. Verfahren (100) nach Anspruch 1 oder 2, wobei das Bestimmen (106, 200) der Anzahl von Partitionen Folgendes umfasst:

   - Variieren lassen der Anzahl von Partitionen zwischen bestimmten Werten und, für jeden Wert der Anzahl von Partitionen:
   - Partitionieren (202) des Teils der Daten des empfangenen Signals gemäß dem Wert der Anzahl von Partitionen,
   - Berechnen (204) eines Qualitätskoeffizienten, der die Qualität der Partitionierung des Teils der Daten des empfangenen Signals misst,
   - Assoziieren des Werts der Anzahl von Partitionen mit dem Qualitätskoeffizienten; und wobei das Verfahren ferner das Auswählen (206) des Werts einer optimalen Anzahl von Partitionen beinhaltet, der der Anzahl von Partitionen entspricht, der mit dem höchsten Qualitätskoeffizienten assoziiert ist.

4. Verfahren (100) nach einem der Ansprüche 1 bis 3, wobei das Partitionieren (108, 300) der Daten des empfangenen Signals durch ein k-Mittelwert-Verfahren durchgeführt wird, das vorab das Erzeugen (302) eines Schwerpunkts für jede Partition und die iterativen Schritte, die aus Folgendem bestehen, beinhaltet:

   - für jeden Schwerpunkt, Zuordnen (304) der Daten des empfangenen Signals, die dem Schwerpunkt in der entsprechenden Partition am nächsten sind, zu dem Schwerpunkt und
   - für jede Partition, Aktualisieren (306) des Schwerpunkts der Partition in Abhängigkeit von dem Leistungsmittelwert des Signals in der Partition.

5. Verfahren (100) nach Anspruch 4 in Kombination mit Anspruch 3, wobei der Qualitätskoeffizient ein Silhouettenkoeffizient ist.

6. Verfahren (100) nach Anspruch 4 oder 5, wobei das Partitionieren (108, 300) der Daten des empfangenen Signals beendet ist, wenn eine Anzahl von Iterationen der iterativen Schritte erreicht ist oder wenn die Schwerpunkte der Partitionen von einer Iteration zur nächsten unverändert bleiben.

7. Verfahren (100) nach einem der Ansprüche 1 bis 6, das vorab eine Vorverarbeitung (104) des empfangenen Signals umfasst, umfassend:

   - Ermitteln von Leistungen des empfangenen Signals für eine Vielzahl von Teilbändern,
   - Durchführen einer Fensterfunktion für die Leistungen des empfangenen Signals in Abhängigkeit von einem Fenster mit bestimmter Länge und
   - Erzeugen der Daten des empfangenen Signals durch Addition und Gewichtung der gefensterten Leistungen des empfangenen Signals.

**8.** Verfahren (100) nach einem der Ansprüche 1 bis 7, wobei das Auswählen eines Teils von Daten eines empfangenen Signals zufällig ist.

**9.** Verfahren (100) nach einem der Ansprüche 1 bis 8, wobei die Varianz der Partition des Rauschens der Leistungsmittelwert der Rauschpartition ist.

**10.** Verfahren zur Ermittlung eines Signal-Rausch-Verhältnisses eines empfangenen Signals, beinhaltend:

- Bestimmen einer Varianz eines mit dem empfangenen Signal assoziierten Rauschens durch ein Verfahren (100) nach einem beliebigen der Ansprüche 1 bis 9;
- Ermitteln des Rauschens in Abhängigkeit von der bestimmten Varianz und
- Ermitteln des Signal-Rausch-Verhältnisses in Abhängigkeit von dem Rauschen und dem empfangenen Signal.

**11.** Verfahren zur Detektion der Anwesenheit eines Signals in einem Telekommunikationssystem, beinhaltend:

- Bestimmen einer Varianz eines mit einem Signal assoziierten Rauschens anhand von bestimmten Abtastungen gemäß einem Verfahren (100) nach einem beliebigen der Ansprüche 1 bis 9,
- Ermitteln eines Detektionsschwellenwerts in Abhängigkeit von der bestimmten Varianz,
- Empfangen einer Leistung während einer bestimmten Erfassungsdauer und
- Bestimmen der Anwesenheit eines Signals, wenn die empfangene Leistung größer als der ermittelte Detektionsschwellenwert ist.

**12.** Verfahren zur Ermittlung einer Spektrumsbelegung eines empfangenen, zuvor abgetasteten Signals, beinhaltend:

- für jedes Frequenzteilband einer Vielzahl von Teilbändern des empfangenen Signals, Bestimmen eines Trägers des Signals durch das Detektieren der Anwesenheit eines Signals in dem Frequenzteilband gemäß dem Verfahren nach Anspruch 11, und
- Ermitteln der Spektrumsbelegung in Abhängigkeit von dem oder den bestimmten Trägern des Signals.

**13.** Vorrichtung (1000) zur Bestimmung eines Rauschens, das mit einem durch die Vorrichtung empfangenen Signal assoziiert ist, umfassend eine Verarbeitungsschaltung zur Umsetzung des Verfahrens (100) nach einem der Ansprüche 1 bis 9.

**14.** Computerprogramm, das Anweisungen zur Umsetzung des Verfahrens (100) nach einem der Ansprüche 1 bis 9 umfasst, wenn die Anweisungen durch einen Prozessor einer Verarbeitungsschaltung ausgeführt werden.

**Claims**

**1.** Method (100) for determining noise associated with a signal received by an equipment connected to a telecommunications network, said received signal being sampled beforehand in the form of a succession of data, the method comprising:

- selecting a portion of the data in the received signal and determining (106, 200) a number of possible partitions of the selected portion of the data in the received signal, the number of partitions being greater than or equal to two,
- partitioning (108, 300) all of the data in the received signal into said number of partitions,
- estimating mean energies of the signal in each of the partitions and identifying a partition from among said partitions having a minimum mean, the identified partition being a noise partition, and
- estimating (112) a variance of the noise partition, the noise associated with the received signal being a function of said variance of the noise partition.

**2.** Method (100) according to Claim 1, comprising:

- refining (110) the variance estimation by determining aberrant data from among the data in the received signal in the noise partition and weighting said aberrant data in the noise partition.

**3.** Method (100) according to Claim 1 or 2, wherein determining (106, 200) the number of partitions comprises:

- varying the number of partitions between given values and, for each value of the number of partitions:

    - partitioning (202) the portion of the data in the received signal according to the value of the number of partitions,
    - calculating (204) a quality coefficient that measures the quality of the partitioning of the portion of the data in the received signal,
    - associating the value of the number of partitions with the quality coefficient; and said method furthermore comprising selecting (206) the value of an optimum number of partitions corresponding to the number of partitions associated with the highest quality coefficient.

4. Method (100) according to one of Claims 1 to 3, wherein the partitioning (108, 300) of the data in the received signal is performed using a k-means method comprising the preliminary generation (302) of a centre of gravity for each partition and the iterative steps of:

    - for each centre of gravity, assigning (304) the data in the received signal that are closest to said centre of gravity into the partition corresponding to said centre of gravity, and
    - for each partition, updating (306) the centre of gravity of said partition on the basis of the mean energy of the signal in said partition.

5. Method (100) according to Claim 4, taken in combination with Claim 3, wherein the quality coefficient is a silhouette coefficient.

6. Method (100) according to Claim 4 or 5, wherein the partitioning (108, 300) of the data in the received signal is terminated when a number of iterations of the iterative steps is reached or when the centres of gravity of the partitions are unchanged from one iteration to the next.

7. Method (100) according to one of Claims 1 to 6, comprising, beforehand, preprocessing (104) of the received signal comprising:

    - estimating energies of the received signal for a plurality of sub-bands,
    - windowing said energies of the received signal on the basis of a window of given length, and
    - generating the data in the received signal by summing and weighting the windowed energies of the received signal.

8. Method (100) according to one of Claims 1 to 7, wherein the selection of a received signal data portion is random.

9. Method (100) according to one of Claims 1 to 8, wherein the variance of the noise partition is the mean energy of the noise partition.

10. Method for estimating a signal-to-noise ratio of a received signal, comprising:

    - determining a variance of noise associated with the received signal using a method (100) according to any one of Claims 1 to 9;
    - estimating the noise on the basis of the determined variance, and
    - estimating the signal-to-noise ratio on the basis of the noise and of the received signal.

11. Method for detecting the presence of a signal in a telecommunications system, comprising:

    - determining a variance of noise associated with a signal based on samples determined according to a method (100) according to any one of Claims 1 to 9;
    - estimating a detection threshold on the basis of the determined variance,
    - receiving an energy for a given acquisition duration, and
    - determining the presence of a signal when the received energy is greater than the estimated detection threshold.

12. Method for estimating a spectral occupancy level of a previously sampled received signal, comprising:

    - for each frequency sub-band of a plurality of sub-bands of the received signal, determining a carrier of the signal by detecting the presence of a signal in said frequency sub-band according to the method of Claim 11, and

- estimating the spectral occupancy level on the basis of the one or more determined carriers of the signal.

13. Device (1000) for determining noise associated with a signal received by said device, comprising a processing circuit for implementing the method (100) according to one of Claims 1 to 9.

14. Computer program comprising instructions for implementing the method (100) according to one of Claims 1 to 9 when said instructions are executed by a processor of a processing circuit.

**FIG.1**

100

| 102 | Réception d'un signal échantillonné |
|---|---|

| 104 | Prétraitement du signal reçu |
|---|---|

| 106 | Détermination d'un nombre optimal de partitions |
|---|---|

| 108 | Partitionnement du signal traité |
|---|---|

| 110 | Affiner le partitionnement |
|---|---|

| 112 | Déterminer la variance d'une partition de bruit |
|---|---|

**FIG.2**

200

Pour un nombre optimal k entre 2 et N

202

Partitionnement d'une partie du signal

204

Estimer un coefficient de silhouette correspondant au nombre optimal i

k >N

206

Sélectionner le nombre optimal

FIG.3

300

302 — Générer des centres de gravité pour les partitions

304 — Partitionner les données du signal

306 — Mise à jour des centres de gravité

308 — Retourner les partitions du signal

FIG.4

1000

1006

1004

1008

IN

PROC

OUT

MEM

1002

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20130322425 A

**Littérature non-brevet citée dans la description**

- **M. HAMID ; N. BJÖRSELL ; S. BEN SLIMANE.** Sample covariance matrix eigen values based blind SNR estimation. *2014 IEEE International Instrumentation and Measurement Technology Conférence (I2MTC) Proceedings,* 2014, 718-722

- **D. MAKOVOZ.** Noise Variance Estimation In Signal Processing. *2006 IEEE International Symposium on Signal Processing and Information Technology,* 2006, 364-369